# EUROPEAN PATENT APPLICATION

(11) **EP 1 701 427 A1**
(43) Date of publication of application: **13.09.2006**
(21) Application number: 06004387.4
(22) Date of filing: 03.03.2006
(51) Int. Cl.: H02K 1/14

(54) **Stator of motor**

(30) Priority: 08.03.2005 KR 2005019138
(71) Applicant: LG Electronics Inc., Yongdungpo-Gu Seoul (KR)
(72) Inventor: Shim, Jang Ho, Yangchun-ku Seoul 158-070 (KR); Kim, Byung Taek, Ansan-si Kyungki-do 425-020 (KR); Lee, Sung Ho, Dongan-ku Anyang-si Kyungki-do 431-060 (KR); Park, Jin Soo, Inchun-si 405-246 (KR)
(74) Representative: Thum, Bernhard

(57) **Abstract**

A stator of a motor includes a ring-shaped yoke, a plurality of teeth radially arranged in a zigzag fashion on the circumference of the yoke, and coils wound around the teeth. Since necks of the teeth are shorter than the yoke and are spaced apart from necks of circumferentially neighboring teeth in the axial direction, lamination factor of windings is enhanced. Moreover, since the necks of the teeth have a circular cross-section, the weight of windings with respect to the same turns of windings can be reduced.

## Description

### BACKGROUND OF THE INVENTION

### Field of the Invention

The present invention relates to a stator of a motor, and more particularly, to a stator of a motor in which necks of teeth neighboring other teeth in the circumferential direction are alternately arranged in the axial direction.

### Description of the Related Art

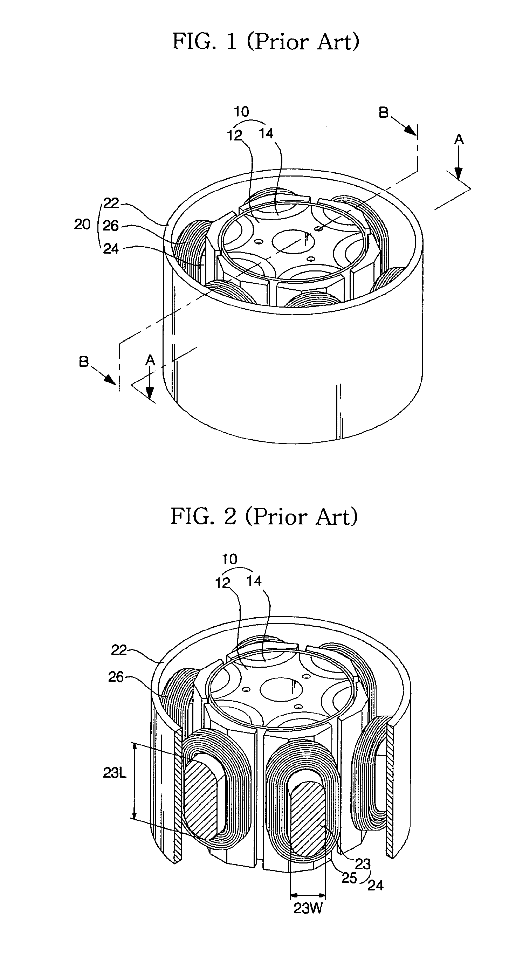

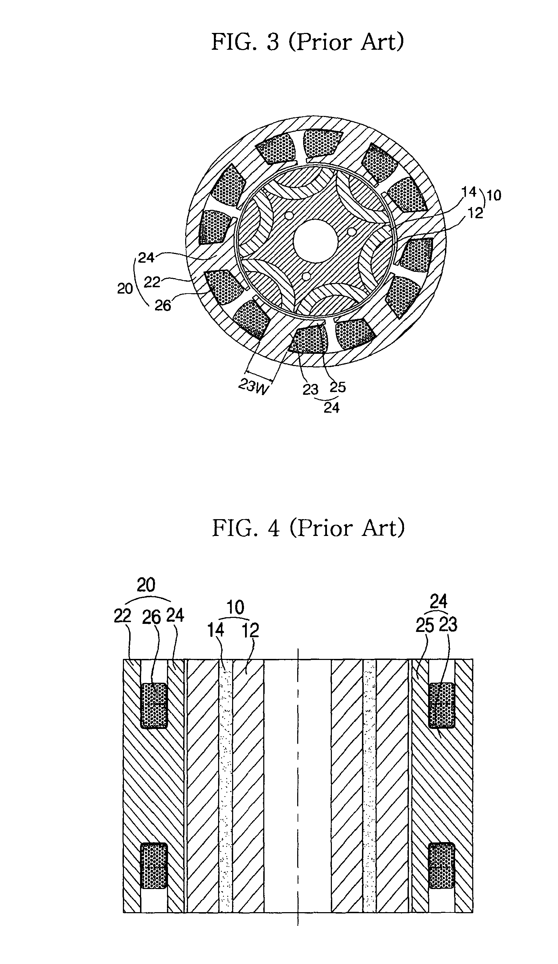

Fig. 1 is a perspective view illustrating a stator of a conventional motor, Fig. 2 is a partially cutaway perspective view illustrating a stator of a conventional motor, Fig. 3 is a sectional view taken along the line A-A in Fig. 1, and Fig. 4 is a sectional view taken along the line B-B in Fig. 2.

The conventional motor shown in Fig. 1 to 4 is an inner rotor motor in which a rotor 10 is rotatably installed in a stator 20 and rotated due to the interaction between the rotor 10 and the stator 20.

A rotor 10 includes a rotor core 12 disposed in the stator 20 to rotate while maintaining a predetermined gap and a plurality of magnets embedded in the rotor core 12 in the circumferential direction.

The stator 20 includes a ring-shaped yoke 22, a plurality of teeth 24 arranged on the inner wall of the yoke 22 in the circumferential direction, and coils 26 wound around the teeth 24 and electrically connected to an external electric power.

The teeth 24 include necks 23, protruded from the inner wall of the yoke 22, around which the coils 26 are wound, and tips 25 disposed at the ends of the necks 23 to face the rotor 10.

The axial ends of the necks 23 of the teeth 24 have outwardly convex round shapes to minimize the end-turn portions of the coils 26.

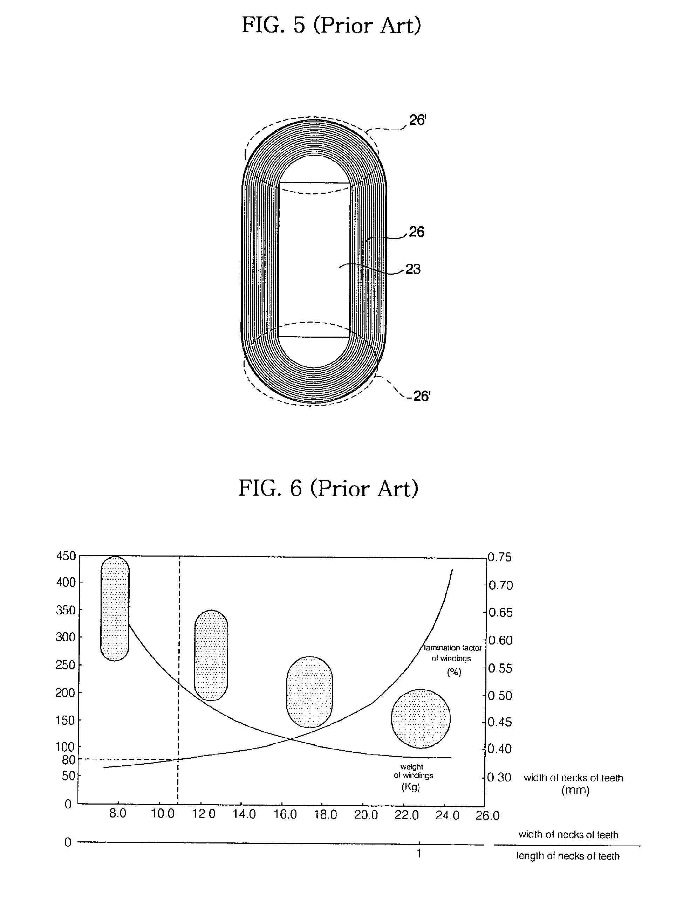

Here, as shown in Fig. 5, the end-turn portions 26' of the coils 26 are portions protruded over the necks 23 of the teeth 24. Since the coils 26 cannot closely contact the axial ends of the necks 23 of the teeth 24 when the axial ends of the necks 23 of the teeth 24 are flat, and the end-turn portions 26' are increased. When the end-turn portions 26' of the coils 26 are increased, the weight of the coils 26 is increased and copper loss of the coils 26 is also increased.

Meanwhile, the necks 23 of the teeth 24, as shown in Fig. 6, preferably have a ratio of width 23W with respect to an axial length 23L of approximately 1 (one).

In other words, as shown in Fig. 6, when the ratio of the width 23W with respect to the axial length 23L approximates 1 (one), namely, when the cross-section is about circular, weight of windings, i.e. the quantity of coils 26 is decreased.

However, as shown in Fig. 6, since the configuration of the necks 23 of the teeth 24 cannot have a circular cross-section because of the restriction due to the lamination factor of the windings.

Here, the lamination factor is defined by the intervals between the teeth 24, i.e. a percentage of the size of portions around which the coils 26 are wound with respect to the size of the slot S, and is generally, due to the interference between the coils 26 wound around respective teeth 24, about 70% to 80%.

For reference, Fig. 6 is a graph in which the size of the yoke 22, the number of the teeth 24, the cross-sectional area of the necks of the teeth 24, and the turns of the coils 26 are depicted under a predetermined assumption.

However, in the stator 20 of the conventional motor, as described above, since the configuration of the necks 23 of the teeth 24 are restricted by the lamination factor, there are limit to reduce the turns of the coils 26 and the weight of the coils with respect to the same turns of the coils.

### SUMMARY OF THE INVENTION

Therefore, the present invention has been made in view of the above and/or other problems, and it is an object of the present invention to provide a stator of a motor in which necks of teeth are misaligned with circumferentially oriented neighboring necks neighbored in the axial direction such the lamination factor is improved.

In accordance with the present invention, the above and other objects can be accomplished by the provision of a stator of a motor including a yoke, a plurality of teeth circumferentially arranged on the circumference of the yoke, and coils wound around the teeth, wherein the axial length of necks of the teeth, around which the coils are wound, is shorter than the axial length of the yoke, and the axial positions of the necks of the teeth are different from the axial positions of necks of circumferentially oriented neighboring teeth.

Preferably, the necks of the teeth are regularly misaligned with each other in the circumferential direction.

The necks of the teeth are symmetrical with respect to necks of circumferentially oriented neighboring teeth about the axial direction.

The necks of the teeth have a circular cross-section.

Each of the teeth includes a neck and a tip positioned at the end of the neck and having the same axial length as the axial length of the yoke.

The yoke and the teeth form a stator core, and the stator core includes a plurality of stator core pieces in which the stator core is divided in the circumferential direction, while the number of the stator core pieces equals the number of teeth.

Each of the stator core pieces includes one of yoke pieces in which the yoke is circumferentially divided into the same number as the number of the teeth in equal size, and a tooth integrally formed with a single yoke piece.

Each of the stator core pieces includes a protrusion circumferentially protruded from the side of each of the stator core piece to another circumferentially oriented neighboring stator core piece, and a recess, formed in the other side of each of the stator core pieces, into which the protrusion of another circumferentially oriented neighboring stator core piece is inserted.

The yoke and the teeth are manufactured via iron powder metallurgy.

The object of the present invention can also be achieved by the provision of a stator of a motor including a yoke, and a plurality of teeth circumferentially arranged on the circumference of the yoke and having necks around which coils are wound, wherein the axial length of necks of the teeth is shorter than the axial length of the yoke, the necks of the teeth have a circular cross-section, and the axial positions of the necks of the teeth are different from the axial positions of necks of circumferentially oriented neighboring teeth.

Preferably, each of the teeth includes a tip positioned at the end of the neck and having the same axial length as the axial length of the yoke.

The yoke and the teeth form a stator core, and the stator core includes a plurality of stator core pieces in which the stator core is divided in the circumferential direction, while the number of the stator core pieces equals the number of teeth.

The yoke and the teeth form a stator core, and the stator core includes a plurality of stator core pieces in which the stator core is divided in the circumferential direction, while the number of the stator core pieces equals the number of teeth.

Each of the stator core pieces includes a protrusion circumferentially protruded from the side of each of the stator core piece to another circumferentially oriented neighboring stator core piece, and a recess, formed in the other side of each of the stator core pieces, into which the protrusion of another circumferentially oriented neighboring stator core piece is inserted.

The yoke and the teeth are manufactured via iron powder metallurgy.

The object of the present invention can also be achieved by the provision of a stator of a motor including a stator core manufactured in iron powder metallurgy and including a yoke and a plurality of teeth circumferentially arranged on the circumference of the yoke and coils wound around the teeth, wherein the axial positions of the necks of the teeth are different from the axial positions of necks of circumferentially oriented neighboring teeth and the necks of the teeth are symmetrical with respect to necks of circumferentially oriented neighboring teeth about the axial direction, wherein the stator core includes a plurality of stator core pieces in which the stator core is divided in the circumferential direction in equal size, while the number of the stator core pieces equals the number of teeth.

The necks of the teeth have a circular cross-section.

Each of the teeth includes a neck and a tip positioned at the end of the neck and having the same axial length as the axial length of the yoke.

Each of the stator core pieces includes a protrusion circumferentially protruded from the side of each of the stator core pieces to another circumferentially oriented neighboring stator core piece, and a recess, formed in the other side of each of the stator core pieces, into which the protrusion of another circumferentially oriented neighboring stator core piece is inserted.

As described above, according to the stator of a motor of the present invention, since the necks of the teeth are spaced apart from necks of circumferentially oriented neighboring teeth in the axial direction, the lamination factor of windings can be enhanced. Moreover, the necks of the teeth have a circular cross-section so that the weight of windings can be reduced with respect to the same turns of windings.

### BRIEF DESCRIPTION OF THE DRAWINGS

These and/or other objects and advantages of the present invention will become apparent and more readily appreciated from the following description of the embodiments, taken in conjunction with the accompanying drawings, in which:
Fig. 1 is a perspective view illustrating a stator of a conventional motor;
Fig. 2 is a partially cutaway perspective view illustrating a stator of a conventional motor;
Fig. 3 is a sectional view taken along the line A-A in Fig. 1;
Fig. 4 is a sectional view taken along the line B-B in Fig. 2;
Fig. 5 is a view illustrating an end coil of a stator of the conventional motor;
Fig. 6 is a graph illustrating the relation between the lamination factor and weight of winding with respect to the size of necks of conventional teeth;
Fig. 7 is a perspective view illustrating a stator of a motor according to a preferred embodiment of the present invention;
Fig. 8 is a sectional view taken along the line C-C in Fig. 7;
Fig. 9 is a partially cutaway perspective view illustrating the stator of the motor according to the preferred embodiment of the present invention;
Fig. 10 is an unassembled view of the teeth of the stator of the motor according to the preferred embodiment of the present invention; and
Fig. 11 is a view illustrating the process of manufacturing the stator of the motor according to the preferred embodiment of the present invention.

### DESCRIPTION OF THE PREFERRED EMBODIMENTS

Hereinafter, embodiments of a stator of a motor according to the present invention will be described with reference to the accompanying drawings.

Several embodiments of the present invention may be described. Since the basic structure of the stator is identical to that of a stator of a conventional motor, a detailed description thereof will be omitted.

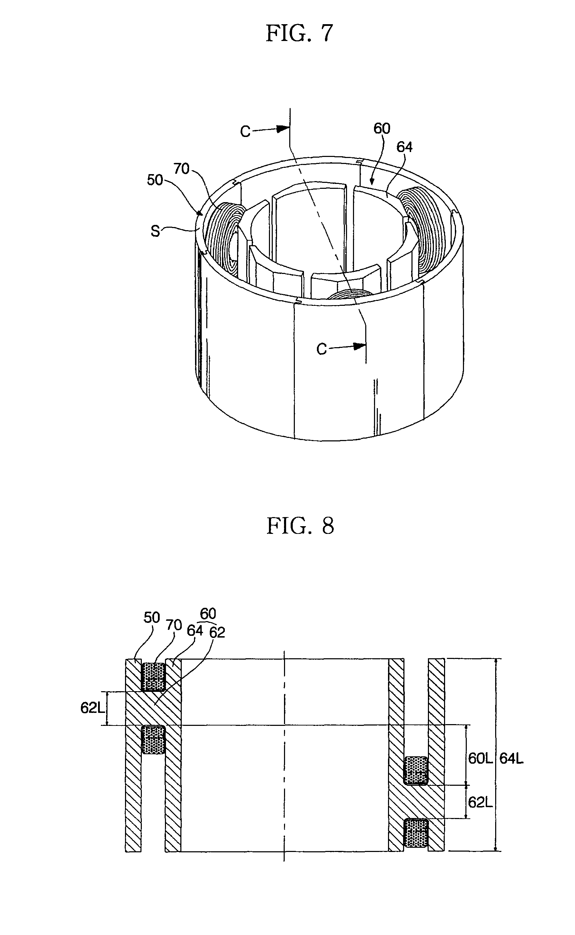

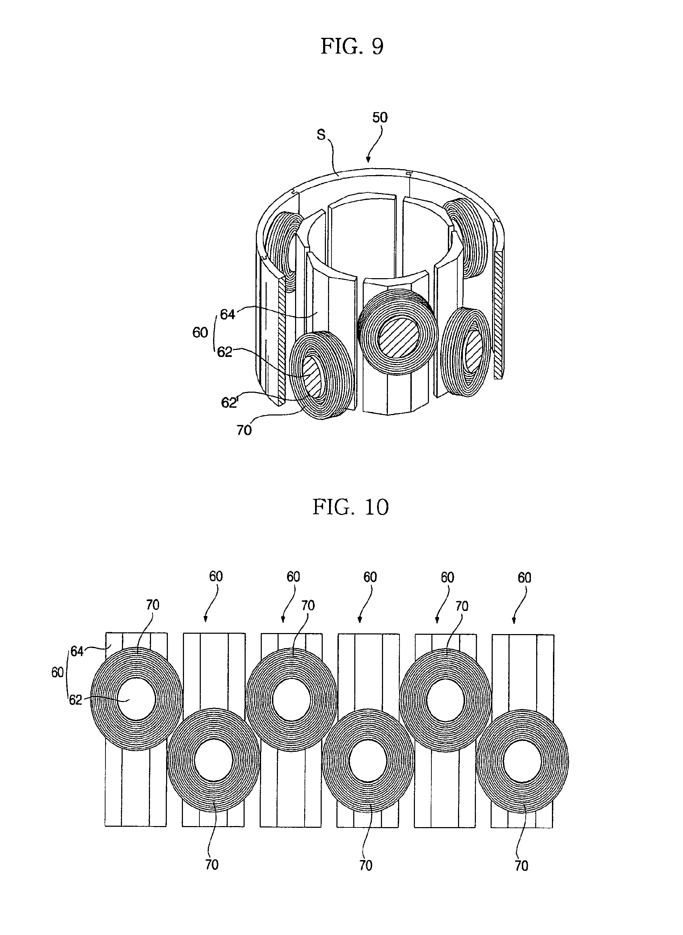

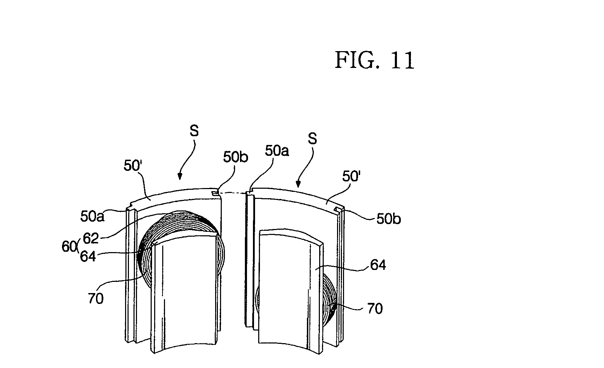

Fig. 7 is a perspective view illustrating a stator of a motor according to a preferred embodiment of the present invention, Fig. 8 is a sectional view taken along the line C-C in Fig. 7, Fig. 9 is a partially cutaway perspective view illustrating the stator of the motor according to the preferred embodiment of the present invention, Fig. 10 is an unassembled view of the teeth of the stator of the motor according to the preferred embodiment of the present invention, and Fig. 11 is a view illustrating the process of manufacturing the stator of the motor according to the preferred embodiment of the present invention.

The motor will be described with reference to Figs. 7 to 11, and is an inner rotor motor in which a rotor is rotatably installed in a stator.

The motor shown in Figs. 7 to 11 includes a ring-shaped yoke 50, teeth 60 arranged on the inner wall of the yoke 50 in the circumferential direction, and coils 70 wound around the teeth 60.

The teeth 60 include necks 62 to which the yoke 50 is connected and around which the coils 70 are wound, and tips 64 connected to the rotor-sided ends of the necks 62 and facing the rotor.

The axial ends of the necks 62 of the teeth 60 have outwardly convex round shapes to minimize the end-turn portions of the coils 70.

Particularly, the axial length 62L of the necks 62 is shorter than the length of the yoke 50 and the axial positions of the necks 62 are different from those of the neighboring necks 62 of the teeth 60 such that spaces required for winding the coils 70 are secured.

The above-mentioned necks 62 of the teeth 60 are symmetric with respect to the necks 62 of the circumferentially oriented neighboring teeth 60 about the axial direction such that more wide winding space for the coils 70 can be secured. Moreover, preferably, the necks 62 of the teeth 60 are misaligned with each other in the circumferential direction.

Additionally, since the necks 62 of the teeth 60 are spaced apart from the necks 62 of the circumferentially oriented neighboring teeth 60 by a predetermined distance 60L in the axial direction so that more wide winding space for the coils 70 can be secured, the cross-section of the necks 62 may be circular such that the sectional areas of the necks 62 are not changed and the weight of the coils 70 can be minimized.

The tips 64 of the teeth 60 preferably have the same axial length 64L as that of the yoke 50 such that core loss can be minimized.

Meanwhile, the combination of the yoke 50 and the teeth 60 is referred to as a stator core, and the stator core is preferably manufactured via iron powder metallurgy such that the configuration can be freely designed.

Additionally, since the axial positions of the necks 62 of the teeth 60 are different from those of the necks 62 of the circumferentially oriented neighboring teeth 60, the stator core may be divided into several parts and assembled for easy design of a mold for manufacturing the stator core.

In other words, the stator core may include a plurality of stator core pieces S in which the stator core is divided in the circumferential direction, wherein the number of the stator core pieces S equals the number of teeth 60 forming a single stator core.

Each of the stator core pieces S may include one of yoke pieces 50' in which the yoke 50 is circumferentially divided into the same number as the number of the teeth 60 forming a single stator core, and a tooth 60 integrally formed with a single yoke piece 50', such that the respective stator core pieces S have the same configuration.

Additionally, a single stator core piece S may include a protrusion 50a circumferentially protruded from the side of the single stator core piece S to another circumferentially oriented neighboring stator core piece S, and a recess 50b, formed in the other side of the single stator core piece S, into which the protrusion 50a of another circumferentially oriented neighboring stator core piece S is inserted so that the stator core piece S can be coupled with another circumferentially oriented neighboring stator core pieces S.

Operation of the stator of a motor according to the present invention, structured as described above, will be described in the following.

Since the necks 62 of the teeth 60 are spaced apart from the necks 62 of circumferentially oriented neighboring teeth 60 and have a circular cross-section, the weight of windings and copper loss are minimized with respect to the same turns of windings or the turns of the coils 70 can be increased.

Although not depicted in the drawings, the motor according to the present invention may be an outer rotor motor in which a rotor is rotatably installed outside a stator.

As described above, since the stator of a motor according to the present invention includes a yoke, a plurality of teeth circumferentially arranged on the circumference of the yoke, and coils wound around the teeth, particularly, the necks of the teeth are shorter than the yoke and are spaced apart from necks of circumferentially oriented neighboring teeth in the axial direction, the lamination factor of windings can be enhanced, whereby the necks of the teeth may have a circular cross-section so that the weight of windings can be reduced with respect to the same turns of windings.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A stator of a motor comprising:
a yoke (50);
a plurality of teeth (60) circumferentially arranged on the circumference of the yoke (50); and
coils (70) wound around the teeth (60);
wherein the axial length (62L) of necks (62) of the teeth (60), around which the coils (70) are wound, is shorter than the axial length of the yoke (50); and
the axial positions of the necks (62) of the teeth (60) are different from the axial positions of necks (62) of circumferentially oriented neighboring teeth (60).

2. The stator of a motor as set forth in claim 1, wherein the necks (62) of the teeth (60) are regularly misaligned with each other in the circumferential direction.

3. The stator of a motor as set forth in claim 1, wherein the necks (62) of the teeth (60) are symmetrical with respect to necks (62) of circumferentially oriented neighboring teeth (60) about the axial direction.

4. The stator of a motor as set forth in claim 1, wherein the necks (62) of the teeth (60) have a circular cross-section.

5. The stator of a motor as set forth in claim 1, wherein each of the teeth (60) includes a neck (62) and a tip (64) positioned at the end of the neck (62) and having the same axial length as the axial length of the yoke (50).

6. The stator of a motor as set forth in claim 1, wherein the yoke (50) and the teeth (60) form a stator core, and the stator core includes a plurality of stator core pieces (S) in which the stator core is divided in the circumferential direction, while the number of the stator core pieces (S) equals the number of teeth (60).

7. The stator of a motor as set forth in claim 6, wherein each of the stator core pieces (S) comprises:
one of yoke pieces (50') in which the yoke (50) is circumferentially divided into the same number as the number of the teeth (60) in equal size; and
a tooth (60) integrally formed with a single yoke piece (50').

8. The stator of a motor as set forth in claim 6, wherein each of the stator core pieces (S) comprises:
a protrusion (50a) circumferentially protruded from the side of each of the stator core piece (S) to another circumferentially oriented neighboring stator core piece (S); and
a recess (50b), formed in the other side of each of the stator core pieces (S), into which the protrusion (50a) of another circumferentially oriented neighboring stator core piece (S) is inserted.

9. The stator of a motor as set forth in claim 1, wherein the yoke (50) and the teeth (60) are manufactured via iron powder metallurgy.

10. A stator of a motor comprising:
a yoke (50); and
a plurality of teeth (60), circumferentially arranged on the circumference of the yoke (50), around which coils (70) are wound;
wherein the teeth (60) include:
circular sectional necks (62), around which the coils (70) are wound, having the axial length shorter than the axial length of the yoke (50); and
tips (64) having the same axial length (62L) as the axial length of the yoke (50);
wherein the axial positions of the necks (62) of the teeth (60) are different from the axial positions of necks (62) of circumferentially oriented neighboring teeth (60), and the necks (62) of the teeth (60) are symmetrical with respect to necks (62) of circumferentially oriented neighboring teeth (60) about the axial direction; and
the yoke (50) and the teeth (60) are manufactured via iron powder metallurgy.
